# EUROPEAN PATENT APPLICATION

(11) **EP 4 357 827 A1**
(43) Date of publication of application: **24.04.2024**
(21) Application number: 23201750.9
(22) Date of filing: 05.10.2023
(51) Int. Cl.: G02B 6/44, G02B 6/54, G02B 6/38

(54) **FIBER TO THE HOME CONNECTION ASSEMBLY**

(30) Priority: 18.10.2022 CH 12332022; 24.01.2023 CH 602023
(71) Applicant: Huber+Suhner AG, 9100 Herisau (CH)
(72) Inventor: Janßen, Robert, 47624 Kevelaer (DE); Schulze, Dominik, 9200 Gossau (CH); Berz, Daniel, 9030 Abtwil (CH)
(74) Representative: Rentsch Partner AG

(57) **Abstract**

The present disclosure relates to a fiber to the home connection assembly (1), which comprises a ground torpedo (2) having a front end (3) and a back end (4) at which a protection sleeve (5) for at least one optical fiber is attached. The ground torpedo (2) comprises a base element (6) with at least one opening (7) for passing at least one optical fiber and a tubular outer housing (8) which extends in an axial direction (x) and which is in a mounted positon detachably interconnected at a distal end (9) of the tubular outer housing (8) to the base element (6). The tubular outer housing (8) encompasses an installation space (10) and comprises at a dorsal end (11) a first cable gland (12) by which the protection sleeve (5) is attached to the tubular outer housing (8) independent of the interconnection between the base element (6) and the tubular outer housing (8).

## Description

### FIELD OF THE DISCLOSURE

The present disclosure relates to a fiber to the home connection assembly comprising a ground torpedo and a protection sleeve for at least one optical fiber.

### BACKGROUND OF THE DISCLOSURE

EP3919954A1, published in the name of HUAWEI TECH CO LTD on 08.12.2021 relates to an optical cable connection apparatus, configured to connect an external optical cable and a drop optical cable. The optical cable connection apparatus includes a first connection mechanism and a second connection mechanism, and the first connection mechanism is detachably connected to the second connection mechanism. The first connection mechanism includes a first connection assembly, and the second connection mechanism includes a second connection assembly, where an end of the first connection assembly is connected to the external optical cable. When the first connection mechanism is connected to the second connection mechanism, the other end of the first connection assembly is connected to an end of the second connection assembly, and the other end of the second connection assembly is connected to the drop optical cable.

### SUMMARY OF THE DISCLOSURE

In fiber optical networks, in particular in fiber to the home (FTTH) networks, typically at least one optical fiber is branched-off a main supply line to reach the boundary of the living space, such as a wall-box on the wall of a home. Fiber-to-the-home solutions are often used in residential areas, whereby a fiber optic network is typically set-up in form of a main supply line, which is designed as a fiber to the neighborhood (FTTN), fiber to the curb (FTTC) or fiber to the street (FTTS) network. From these so called main supply lines in form of a bundle of fiber optic cables, at least one optical fiber is branched-off to each property.

In newly developed residential areas, the connection between the at least one branched-off optical fiber and the actual property is often times established via so called spliced closures. These spliced closures are typically cost efficient connection assemblies, being fully buried and sealing the end of the branched-off optical fiber, until the actual connection is established. Until the construction of the building has taken place, the spliced closure serves as the fiber termination. When the user end needs to activate the service, an access terminal box is disposed in the building, which is then connected to the spliced closure buried in the ground.

The retrofitting of new branch cables is difficult in existing fiber optic networks. Especially in fiber to the street (FTTS) networks, the main supply line is typically arranged on one side of the respective street. Retrofitting branched-off optical fibers to the other side of the street is therefore difficult, as digging a trench is not an option and tearing up the street is extremely costly. To overcome this problem, so called "Earth Rockets" can be used, which are suitable for short distances and can cross under obstacles in a straight line in the ground, like for example underneath an existing street. Earth rocket shooting is a ground displacement method that does not require earth to be removed or washed away. A pneumatic hammer with a shape resembling a rocket, is driven through the soil. This is the reason why the pneumatic hammer is called "earth rocket". These earth rockets can be used to retrofit fiber optical cables in residential areas, by branching off at least one optical fiber and laying the at least one optical fiber to the respective property through the tunnel created by the earth rocket. To actually lay the fiber optical cable, a special connection assembly is required, which can be pushed through the tunnel created by the earth rocket. These connection assemblies typically have to protect the at least one optical fiber, a thereto connected connector and eventually also a fiber tray with a fiber management area, comprising slots for splices and/or for fiber optical connectors.

One of the objectives of the present disclosure can be seen in providing a fiber to the home connection assembly, which reduces loads being applied onto internal components, especially axial loads during the laying in the ground.

Another objective can be seen in providing a fiber to the home connection assembly, which is easy to assemble and at the same time well sealed against environmental influences in the long run.

The fiber to the home connection assembly is usually installed in a two-staged process with the two stages being potentially separated from each other by years of time. After a channel has been dug by the earth rocket, the protection sleeve is typically attached to the back end of the ground torpedo onsite. The pre-assembled ground torpedo is pushed through the channel, after the at least one optical fiber has been routed through the protection sleeve. When the actual connection is required, a channel is typically dug from the property to the location of the ground torpedo in the ground to connect an optical cable to the ground torpedo. Given the outdoor use of the ground torpedo, a fast simple and durable connection between optical cable and ground torpedo is desired.

A fiber to the home connection assembly according to the present disclosure comprises a ground torpedo having a front end and a back end. The name derives from the typical shape. Good results regarding the laying characteristics can be achieved when the ground torpedo has a slim outer silhouette. In this context, slim outer silhouette is defined as having a length, which is at least three to five times the diameter. In addition, as the tunnels driven in the ground by earth rockets are essentially round, good results can be achieved when the ground torpedo is essentially rotational symmetrical with respect to an axial direction.

The ground torpedo typically comprises a tubular outer housing, which encompasses an installation space e.g. suitable for receiving a fiber management system and/or a plug connector. The tubular outer housing may be attached to an end (first end) of the base element. Alternatively, the base element may be embedded in the tubular outer housing. Good results can be achieved when the ground torpedo has an essentially uniform outer diameter without components protruding away from an outer surface in the circumferential direction. A uniform outer geometry is desired as it is beneficial e.g. for pushing the ground torpedo through a tunnel driven by an earth rocket. Components protruding above an outer shell surface of the ground torpedo, e.g. locking elements or cladding components, can be torn apart when the ground torpedo is pushed through the tunnel or the overall ground torpedo can get stuck when the protruding parts get caught in the surrounding ground. The outer shell surface of the ground torpedo can have a tapered or conical form along the axial direction. For easy demoldability, the outer shell surface of the ground torpedo can be conical with a drafting angle of about 0.25 degrees to 1.5 degrees, preferably 0.5 degrees to 1.0 degrees degrees.

The tubular outer housing extends in the axial direction and is in a mounted positon at a distal end of the tubular outer housing detachably interconnected to the base element. The distal end of the tubular outer housing may be connected to the base element by a thread and may be sealed by a sealing ring. Good results regarding an assembly friendly design of the tubular outer housing can be achieved when the tubular outer housing comprises a corrugated outer surface. In a variation the outer surface of the tubular outer housing can comprise several recesses, which extend at least partially from the distal end to the proximal end and/or vice versa. The recesses can increase the grip of the outer surface of the tubular outer housing and thereby improve the ease of assembly. The first cable gland is typically is screwed to the tubular outer housing. The first cable gland can be screwed into a thread arranged in a bore at the dorsal end of the tubular outer housing in a sealed manner, e.g. by means of a sealing ring.

For sealing at least one optical fiber in the ground, a protection sleeve for at least one optical fiber is usually attached to the back end of the ground torpedo. The protection sleeve is usually attached before the ground torpedo is laid in the ground. In the assembled state, at least one optical fiber is typically arranged in the protection sleeve, which is at least during the assembly displaceable with respect to the protection sleeve and extends into the installations space. The optical fiber is typically blown through the protection sleeve, connecting the ground torpedo to a main supply line. In the assembled state, the at least one optical fiber can be attached to the ground torpedo by a strain relief. The strain relief can be in form of a screw with which a fiber sheathing is interconnected to the tubular outer housing or the base element. The ground torpedo can comprise a gas stop which seals the protection sleeve against fluids and gas. The gas stop is typically connected to an end of the protection sleeve and can be mounted within the installation space. The gas stop can be designed as a cylindrical sleeve which is attached to the end of the protection sleeve. Typically the gas stop comprises an end plug which seals the protection sleeve and prevents fluids and gas from entering the protection sleeve.

The gas stop can comprise at least two elements. A first element is typically the outer element, which can be e.g. in form of a cylindrical sleeve. The first element may act as a strain relief for the protection sleeve respectively an incoming optical cable. The gas stop typically prevents a displacement of the protection sleeve respectively the incoming optical cable. A displacement could damage the at least one optical fiber inside the installation space, e.g. when the first cable gland is tightened after attaching the tubular outer housing. The gas stop, which can be interconnected to the base element and act as a strain relief for the protection sleeve may be attached to the fiber tray. Interconnected is throughout the disclosure to be understood as being mechanically connected regarding the flux of force, but not as being directly physically connected with each other. The typically tubular outer part of the gas stop, e.g. in form of a cylindrical sleeve, can be arranged in a recess of the fiber tray. The gas stop can be mounted, e.g. via straps to the fiber tray and secure the protection sleeve with respect to the base element in the axial direction. The gas stop may comprise an end plug as a second element, which seals the protection sleeve against fluids and gas. The end plug can be arranged at the gas stop, facing the installation space and seal the at least one optical fiber within the protection sleeve with respect to the protection sleeve.

For an assembly friendly set-up, the ground torpedo typically comprises a base element with at least one opening for passing at least one optical fiber through. Depending on the design, the base element can be the core element of the ground torpedo with the tubular outer housing being connected to the base element. The base element can be ring shaped with a circumferential collar and a partition wall. The opening of the base element is typically arranged in the partition wall and a plug connector may be arranged in the opening. The plug connector can interconnect the at least one optical fiber with at least one optical fiber of a mating plug connector. Good results can be achieved when the plug connector is during assembly pushed through the partition wall and attached to it. The plug connector can be secured by a locking washer or a screw nut. For securing the installation space of the ground torpedo against environmental influences, the plug connector is typically mounted in the opening in a sealed manner. The base element and/or the tubular outer housing can be made by injection molding.

The ground torpedo can comprise at the front end a protection cap. The protection cap can protect the plug connector and/or the installation space from environmental influences. In a variation, the base element may be embedded in the tubular outer housing and the cone-shaped protection cap can be connected to the tubular outer housing. With such a design, several sealing means can be avoided. The base element, which may be embedded in the tubular outer housing may be encompassed by the tubular outer housing with the protection cap being attached to the tubular outer housing. Alternatively or in addition, a connector cap can be attached to the plug connector. A connector cap is not necessary, but can be added to protect and seal optics inside the plug connector. With an attached connector cap, a sealing element for the protection cap can be avoided as the connector is protected by the connector cap.

A plug connector in form of a quick coupler can be beneficial regarding a fast assembly process. Typically, after removing the protection cap, a mating plug connector can be pushed onto the plug connector of the ground torpedo. After the removal of the protection cap the mating plug connector, e.g. attached to an optical cable, can be attached to the plug connector. The plug connector may be arranged in the opening of the base element. This type of connection allows a very fast assembly process, even under outdoor conditions onsite. Therefore, quick couplers with a slidable locking feature can be used. These types of connectors make a connection without screwing possible. The connection between the plug connector and the mating plug connector can be sealed such that the connection itself is protected from environmental influences, preferably even without the need for an additional sealing means, e.g. like a sealing cap. Compared to known connections and ground torpedoes, this type of connection can reduce the assembly time and the number of parts necessary.

Another benefit of a ground torpedo with a thereto attached sealed plug connector is that any standardized optical cable with thereto attached mating plug connector can be directly connected to the plug connector without special modifications.

The plug connector and/or the mating plug connector may comprise circumferential grooves in which protrusions of the mating plug connector engage in the assembled state. Alternatively, this operating principle can be also reversed with the plug connector comprising protrusions and the mating plug connector comprising circumferential grooves. Such a quick lock connection mechanism ensures that a connection without a screw connection is possible which is nevertheless pullout-proof and sealed against environmental influences. To ensure a connection, which is also reliable for many years in the ground, the mating plug connector and/or the plug connector can comprise sealing elements, e.g. in form of sealing rings, to prevent the connection from environmental influences.

Alternatively, the ground torpedo may comprise a base element with at least one opening for passing at least one optical fiber through, wherein a second cable gland is arranged in the opening of the base element. The ground torpedo can be designed for attaching a first protection sleeve to the back end via a first cable gland and a second protection sleeve to the front end of the ground torpedo via a second cable gland. With the second cable gland being arranged in the opening of the base element, no plug connector is needed. Through the second cable gland at least one optical fiber of at least one fiber optical cable can be routed into the installation space The ground torpedo can serve as a connection element for the first and the second protection sleeve and provide a fiber management area in the installation space, e.g. on the fiber tray. The second cable gland has the advantage that several fiber optical cables can be routed into the installation space.

During the laying of the ground torpedo and especially while being in the ground for a long time, the internal components of the ground torpedo need to be protected against environmental influences. Good results can be achieved when the protection cap is connected to the base element. The protection cap can be cone-shaped and may be attached to an end (second end) of the base element. Typically, the protection cap is mounted in a sealed manner until the respective home is to be connected to the fiber network. Therefore, at least one optical fiber is laid from the building to the fiber to the home connection assembly and connected to the at least one optical fiber arranged within the fiber to the home connection assembly. For the connection the protection cap is typically removed.

To also protect the fiber to the home connection assembly at the back end against environmental influences, the tubular outer housing encompassing the installation space can comprise at a dorsal end a first cable gland. Typically the protection sleeve is attached to the tubular outer housing independent of the interconnection between the base element and the tubular outer housing by the first cable gland. Good results regarding the flux of forces within the fiber to the home assembly can be achieved when the first cable gland is arranged outside of the tubular outer housing. Such a design can avoid the housing being statically over-determined and at the same time improve the sealing. In addition, the first cable gland can be configured as a strain relief means, which transfers the axial load from the protection sleeve to the tubular outer housing. In case that additional components like a fiber management are installed within the tubular outer housing, the first cable gland can transfer forces form the protection sleeve to the tubular outer housing and avoid the forces being transmitted to the fiber management.

For handling the at least one optical fiber within the fiber to the home connection assembly, a fiber tray with a fiber management area may be arranged in the installation space. The fiber management area can comprise slots for splice protectors and/or slots for plug connectors. The at least one fiber tray can be an essentially rectangular board which can be connected to the base element and/or the tubular outer housing. In a variation, the fiber tray may be arranged in guides in the tubular outer housing. Alternatively or in addition, the fiber tray may be releasably connected to the base element by latching elements. The latching elements can protrude away from the fiber tray and in the assembled state engage in recesses in the base element.

One of the issues with fiber to the home connection assemblies is that once they are positioned in the ground they tend to be difficult to be found. To be able to detect the fiber to the home connection assembly in the underground, the ground torpedo can comprise an identification element for localizing the fiber to the home connection assembly in the ground. The identification element may be mounted within the installation space and/or on the fiber tray. Typically, passive transponders, like passive RFID tags can be used. Passive RFID transponders power themselves from the radio signals of the interrogator. With a coil as the receiving antenna, a capacitor is charged by induction similar to a transformer, which makes it possible to send the response in interruptions of the interrogation signal.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The herein described disclosure will be more fully understood from the detailed description given herein below and the accompanying drawings which should not be considered limiting to the disclosure described in the appended claims. The drawings are showing:
- Fig. 1: A perspective view from above and behind on a variation of the fiber to the home connection assembly;
- Fig. 2: A perspective view from above and the front on the variation of the fiber to the home connection assembly according to Figure 1 in a partially sectional view;
- Fig. 3: A perspective view from above and the front on the variation of the fiber to the home connection assembly according to Figure 1, in an enlarged view on the back end in Fig. 3a, a partially sectional view in Fig. 3b and an enlarged view on the front end in Fig. 3c;
- Fig. 4: A perspective view from above and behind on the variation of the fiber to the home connection assembly according to Figure 1 in an exploded view;
- Fig. 5: A perspective view from below and the front on a variation of the fiber tray as mounted in the fiber to the home connection assembly according to Figure 1;
- Fig. 6: A perspective view from above and the front on the fiber to the home connection assembly according to Figure 1 in an assembled state with a thereto connected mating plug connector in Figure 6a and a detailed perspective view thereof in Figure 6b;
- Fig. 7: A perspective exploded view from above and the front on the fiber to the home connection assembly according to Figure 6 with a partial cut-out in Figure 7a and a detailed perspective view thereof in Figure 7b;
- Fig. 8: A perspective view from above and behind on the fiber to the home connection assembly according to Figure 6 with removed tubular outer housing and a partial cut-out in Figure 8a and a detailed perspective view thereof in Figure 8b;
- Fig. 9: A perspective exploded view from above and the front on an alternative variation of the fiber to the home connection assembly;
- Fig. 10: A perspective view from above and the front on the variation of the fiber to the home connection assembly according to Figure 9, in an partially sectional view in Fig. 10a and an enlarged view thereof in Fig. 10b.

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

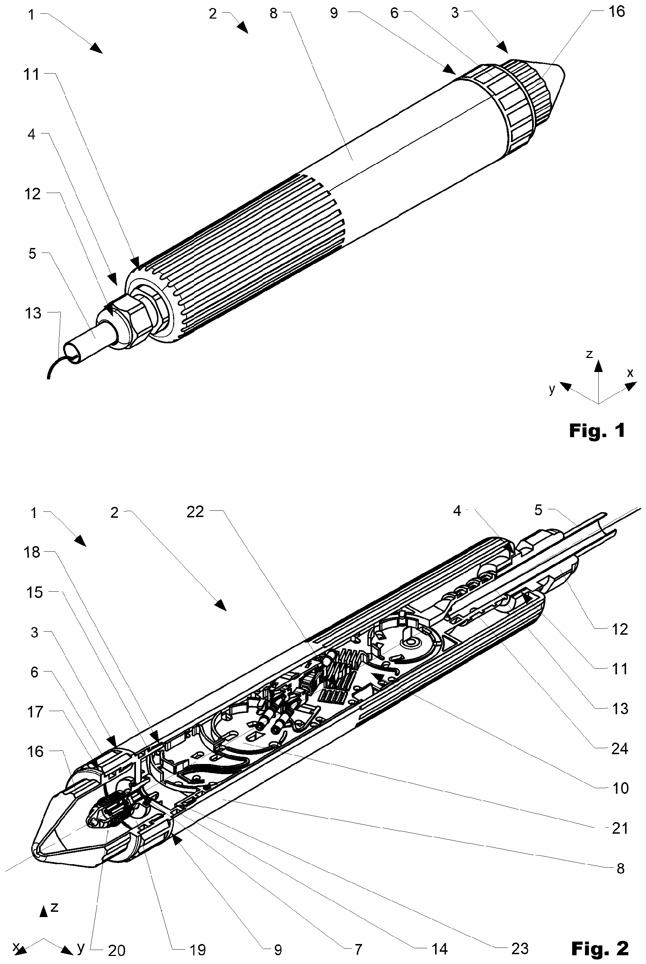

**Figure 1** shows a perspective view from above and behind on a variation of the fiber to the home connection assembly 1. The shown fiber to the home connection assembly 1 comprises a ground torpedo 2, having a front end 3 and a back end 4 at which a protection sleeve 5 for at least one optical fiber is attached. The ground torpedo 2 of the shown variation comprises a base element 6 with at least one opening for passing at least one optical fiber through and a tubular outer housing 8, which extends in an axial direction x and is in a mounted positon detachably interconnected at a distal end 9 of the tubular outer housing 8 to the base element 6. The shown tubular outer housing 8 encompasses an installation space and comprises at a dorsal end 11 a first cable gland 12 by which the protection sleeve 5 is attached to the tubular outer housing 8 independent of the interconnection between the base element 6 and the tubular outer housing 8. The ground torpedo 2 of the shown fiber to the home connection assembly 1 has an essentially uniform outer diameter without components protruding in the circumferential direction. A cone-shaped protection cap 16 is connected to the base element 6 to protect the installation space from environmental influences.

**Figure 2** shows a perspective view from above and the front on the variation of the fiber to the home connection assembly 1 according to **Figure 1** in a partially sectional view. In the shown variation, at least one optical fiber 13 is arranged in the protection sleeve 5, which is displaceable with respect to the protection sleeve 5 and extends into the installations space 10 during installation. The shown first cable gland 12 is arranged outside of the tubular outer housing 8 and can be configured as a strain relief means which transfers the axial load from the protection sleeve 5 to the tubular outer housing 8.

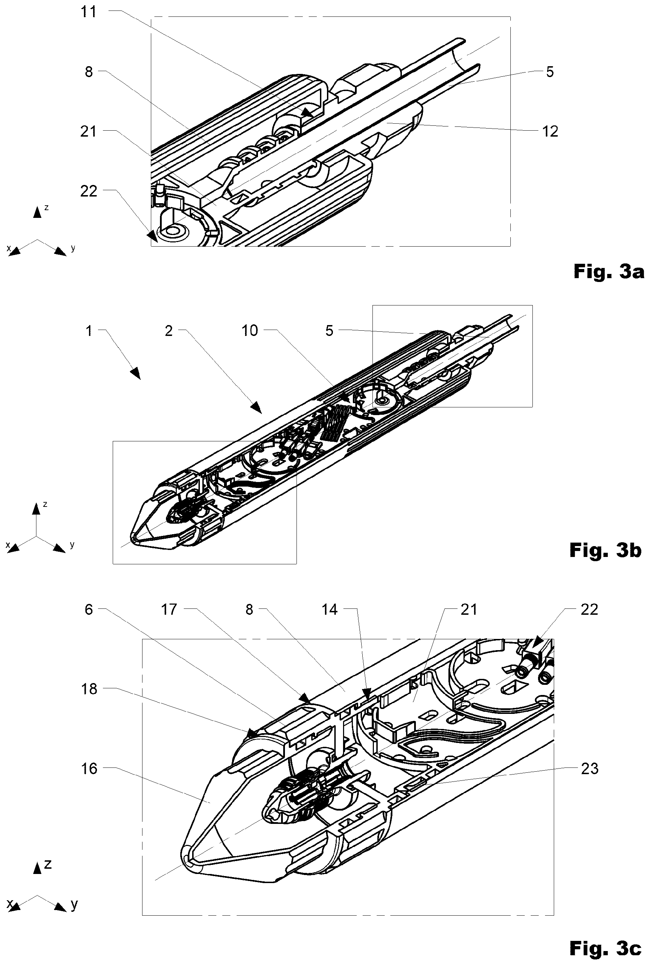

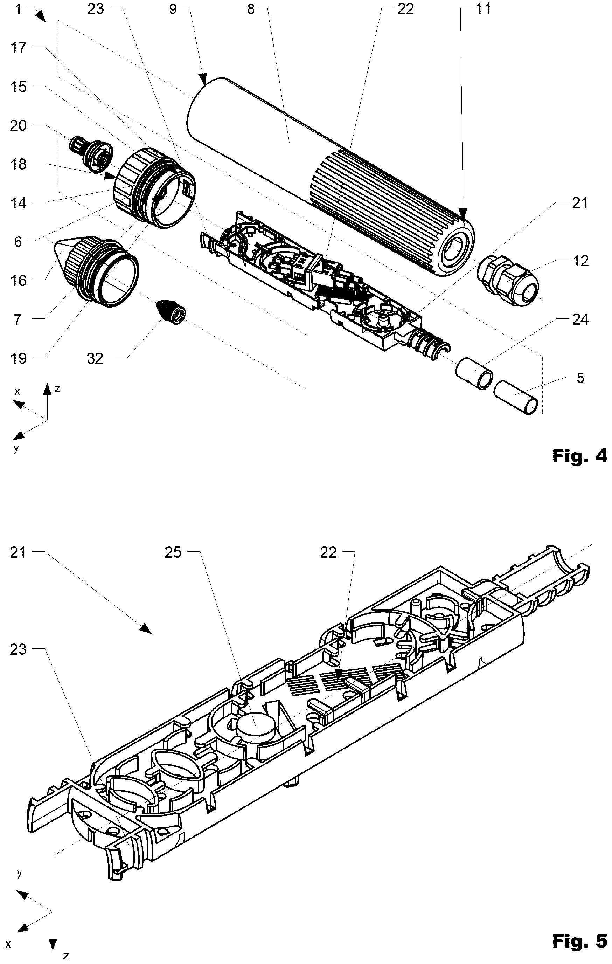

**Figure 3** shows an enlarged view on the back end in **Fig. 3a****,** a perspective view from above and the front on the variation of the fiber to the home connection assembly according to **Figure 1** in a partially sectional view in **Fig. 3b** and an enlarged view on the front end in **Fig. 3c****.** The ground torpedo 2 of the shown variation of the fiber to the home connection assembly 1 comprises a gas stop 24 (shown in Fig. 4) which is connected to an end of the protection sleeve 5 and is mounted within the installation space 10. The shown gas stop 24 comprises an end plug which seals the protection sleeve 5 against fluids and gas.

**Figure 4** shows a perspective view from above and behind on the variation of the fiber to the home connection assembly 1 according to **Figure 1** in an exploded view. The distal end 9 of the shown tubular outer housing 8 is connected to the base element 6 by a thread 14 and is sealed by a sealing ring 15. The ground torpedo 2 of the shown variation comprises at the front end 3 a cone-shaped protection cap 16. The shown base element 6 is ring shaped and the tubular outer housing 8 is attached to a first end 17 of the base element 6 and the cone-shaped protection cap 16 is attached to a second end 18 of the base element 6. The opening 7 of the base element 6 is arranged in a partition wall 19 and a plug connector 20 is arranged in the opening 7. During the assembly, the plug connector 20 is pushed through the partition wall 19 and secured by a locking washer. In addition, a connector cap 32 is attached to the plug connector 20. The connector cap 32 is not necessary, but can be added to protect and seal optics inside the plug connector 20. With an attached connector cap 32, sealing of the protection cap 16 can be avoided.

**Figure** 5 shows a perspective view from below and the front on a variation of the fiber tray 21 as mounted in the home connection assembly according to **Figure 1****.** The shown fiber tray 21 with a fiber management area 22 is arranged in the installation space and connected to the base element 6 and/or the tubular outer housing 8. In the shown variation, the fiber tray 21 is releasably connected to the base element 6 by latching elements 23. In addition, an identification element 25 is mounted on the fiber tray 21 for localizing the ground torpedo 2 in the ground. The shown identification element 25 is in the assembled state mounted within the installation space.

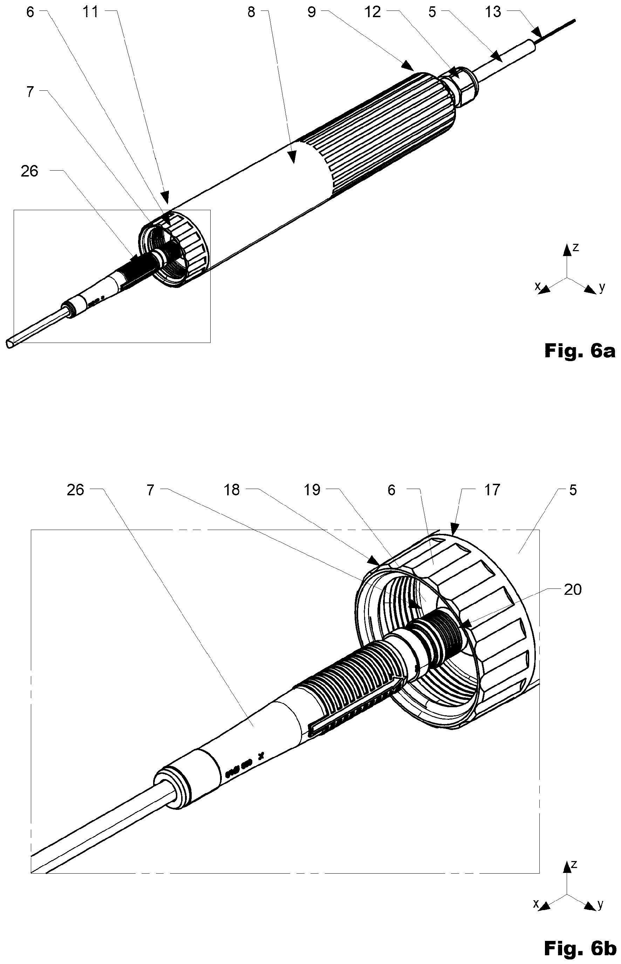

**Figure 6** shows a perspective view from above and the front on the fiber to the home connection assembly 1 in an assembled state with a thereto connected mating plug connector 26 in **Figure 6a** and a detailed perspective view thereof in **Figure 6b**. As can be obtained from the Figures, after the removal of the protection cap, the mating plug connector 26 of the optical cable 27 is directly attached to the plug connector 20, which is arranged in the opening 7 of the base element 6. The shown plug connector 20 in form of a quick coupler is beneficial regarding a fast assembly process. Typically, after removing the protection cap, the shown mating plug connector 26 is pushed onto the plug connector 20 of the ground torpedo 2. This allows a very fast assembly process, even under outdoor conditions onsite. Therefore, quick couplers with a slidable locking feature 28 can be used.

As can be obtained from **Figure 6b****,** which shows a detailed perspective view of the fiber to the home connection assembly 1, where the mating plug connector 26 is plugged onto the plug connector 20, these types of connectors make a connection without screwing possible. The connection between the plug connector 20 and the mating plug connector 26 is preferably sealed such that the connection itself is protected from environmental influences, preferably even without the need for an additional sealing means, e.g. like a sealing cap. Compared to known connections and ground torpedos, this type of connection reduces the assembly time and the number of parts necessary. Another benefit of the shown ground torpedo 2 with thereto attached sealed plug connector 20 is that any standardized optical cable 27 with thereto attached mating plug connector 26 can be directly connected to the plug connector 20 without special modifications.

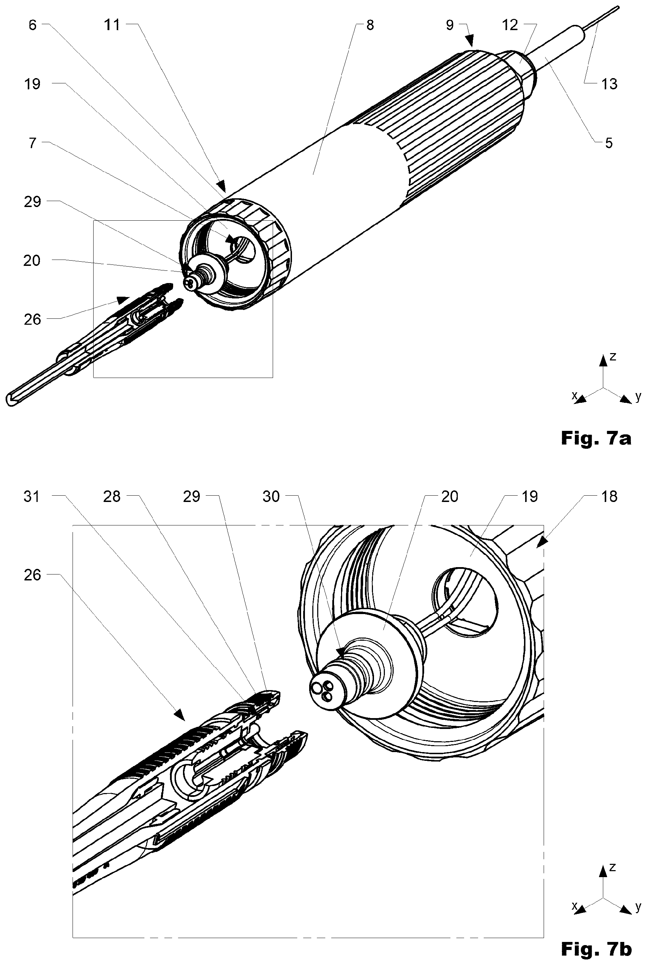

**Figure 7** shows a perspective exploded view from above and the front on the fiber to the home connection assembly 1. **Figure 7a** shows the fiber to the home connection assembly 1 with a partial cut-out. As can be obtained, the plug connector 20 is arranged in the opening 7 of the partition wall 19. As can be seen in **Figure 7b****,** the shown variation of the plug connector 20 comprises circumferential grooves 29 in which protrusions 30 of the mating plug connector 26 engage in the assembled state or vice versa. This quick lock connection mechanism ensures that a connection without a screw connection is possible which is nevertheless pullout-proof and sealed against environmental influences. Therefore, the mating plug connector 26 and/or the plug connector 20 can comprise sealing elements 31, e.g. in form of sealing rings.

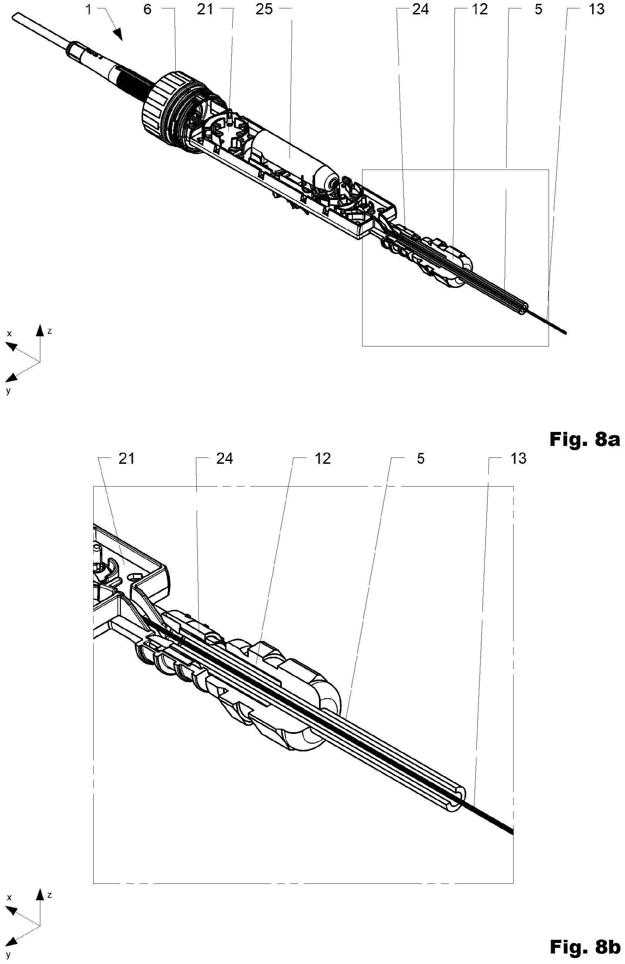

**Figure 8** shows a perspective view from above and behind on the fiber to the home connection assembly 1 with removed tubular outer housing and a partial cut-out in **Figure 8a****.** The shown fiber tray 21, shown from below and behind is mounted in the installation space and connected to the base element 6 inside the tubular outer housing (which is not shown in the present Figure). An identification element 25 is mounted on the fiber tray 21 for localizing the ground torpedo 2 in the ground. The shown identification element 25 is in the assembled state mounted within the installation space. In addition, as can be obtained best from **Figure 8b****,** a gas stop 24 is connected to an end of the protection sleeve 5 within the installation space 10. The shown gas stop 24 is interconnected to the base element and acts as a strain relief for the protection sleeve 5. In the shown embodiment, the gas stop 24 is interconnected to the base element 6 via the fiber tray 21. Therefore, the tubular outer part of the gas stop 24 is arranged in a recess of the fiber tray 21. The gas stop can be mounted, e.g. via straps to the fiber tray 21 and secures the protection sleeve 5 with respect to the base element in the axial direction x. The shown gas stop 24 comprises an end plug which seals the protection sleeve 5 against fluids and gas.

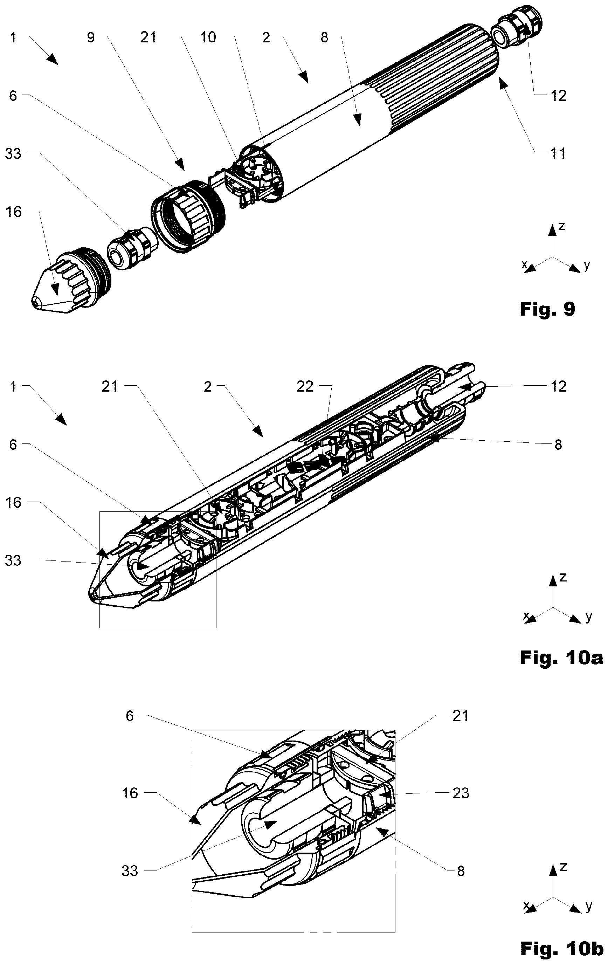

**Figure 9** shows a perspective exploded view from above and the front on an alternative variation of the fiber to the home connection assembly 1. The shown fiber to the home connection assembly 1 comprises a ground torpedo 2, having a front end and a back end to which a protection sleeve 5 for at least one optical fiber can be attached. The ground torpedo 2 of the shown variation comprises a tubular outer housing 8 which extends in an axial direction x and is interconnected at a distal end 9 of the tubular outer housing 8 to the base element 6. The shown tubular outer housing 8 encompasses an installation space 10 and comprises at the dorsal end 11 a first cable gland 12 by which the protection sleeve 5 is attached to the tubular outer housing 8 independent of the interconnection between the base element 6 and the tubular outer housing 8. The ground torpedo 2 of the shown fiber to the home connection assembly 1 has an essentially uniform outer diameter without components protruding in the circumferential direction. A cone-shaped protection cap 16 is connected to the base element 6 to protect the installation space 10 from environmental influences. The ground torpedo 2 of the shown variation comprises a base element 6 with at least one opening for passing at least one optical fiber through. In the shown variation, a second cable gland 33 is arranged in the opening of the base element.

**Figure 10** shows a perspective view from above and the front on the variation of the fiber to the home connection assembly 1 in a partially sectional view in **Figure 10a** and an enlarged view thereof in **Figure 10b****.** The shown variation of the ground torpedo 2 is designed for attaching a first protection sleeve 5 to the back end and a second protection sleeve to the front end of the ground torpedo 2. In this variation, no plug connector is needed. The ground torpedo 2 serves as a connection element for the first 5 and the second protection sleeve and provides a fiber management area on the fiber tray 21.

Rather, the words used in the specification are words of description rather than limitation, and it is to be understood that various changes may be made without departing from the scope of the disclosure.

### LIST OF DESIGNATIONS

- 1: Fiber to the home connection assembly
- 2: Ground torpedo
- 3: Front end (ground torpedo)
- 4: Back end (ground torpedo)
- 5: Protection sleeve
- 6: Base element
- 7: Opening
- 8: Tubular outer housing
- 9: Distal end (tubular outer housing)
- 10: Installation space
- 11: Dorsal end (tubular outer housing)
- 12: First cable gland
- 13: Optical fiber
- 14: Thread
- 15: Sealing ring

- 16: Protection cap
- 17: First end (base element)
- 18: Second end (base element)
- 19: Partition wall
- 20: Plug connector
- 21: Fiber tray
- 22: Fiber management area
- 23: Latching elements
- 24: Gas stop
- 25: Identification element
- 26: Mating plug connector
- 27: Optical cable
- 28: Locking feature
- 29: Groove
- 30: Protrusion
- 31: Sealing element
- 32: Connector cap
- 33: Second cable gland

## Claims

1. A fiber to the home connection assembly (1), comprising a ground torpedo (2) having a front end (3) and a back end (4) at which a protection sleeve (5) for at least one optical fiber is attached, wherein:
a. the ground torpedo (2) comprises a base element (6) with at least one opening (7) for passing at least one optical fiber through, and
b. a tubular outer housing (8) extending in an axial direction (x) and being in a mounted positon detachably interconnected at a distal end (9) of the tubular outer housing (8) to the base element (6);
c. the tubular outer housing (8) encompasses an installation space (10) and comprises at a dorsal end (11) a first cable gland (12) by which the protection sleeve (5) is attached to the tubular outer housing (8) independent of the interconnection between the base element (6) and the tubular outer housing (8).

2. The fiber to the home connection assembly (1) according to claim 1, **wherein** a gas stop (24) is connected to an end of the protection sleeve (5) within the installation space (10), which gas stop (24) is preferably interconnected to the base element (6) and acts as a strain relief for the protection sleeve (5).

3. The fiber to the home connection assembly (1) according to claim 2, **wherein** the gas stop (24) comprises an end plug which seals the protection sleeve (5) against fluids and gas.

4. The fiber to the home connection assembly (1) according to one of the preceding claims, **wherein** the first cable gland (12) is arranged outside of the tubular outer housing (8).

5. The fiber to the home connection assembly (1) according to one of the preceding claims, **wherein** the opening (7) of the base element (6) is arranged in a partition wall (19) and a plug connector (20) is arranged in the opening (7).

6. The fiber to the home connection assembly (1) according to claim 5, **wherein** the plug connector (20) is a quick coupler (31) for connecting a mating plug connector (26) to the ground torpedo in a sealed manner and wherein the plug connector (20) preferably comprises at least one circumferential groove (29) and/or protrusion (30) for connecting the mating plug connector (26) to the ground torpedo as a snap connection.

7. The fiber to the home connection assembly (1) according to one of claim 5 or 6, **wherein** the plug connector (20) is pushed through the partition wall (19) and attached to the partition wall (19).

8. The fiber to the home connection assembly (1) according to one of claims 1 to 4, **wherein** the opening (7) of the base element (6) is arranged in a partition wall (19) and a second cable gland (33) is arranged in the opening (7) and wherein a fiber optical cable is preferably attached to the fiber to the home connection assembly (1) by the second cable gland (33) and at least one optical fiber of at least one fiber optical cable is routed into the installation space (10).

9. The fiber to the home connection assembly (1) according to one of the preceding claims, **wherein** the ground torpedo (2) comprises at the front end (3) a cone-shaped protection cap (16), which cone-shaped protection cap (16) is preferably connected to the base element (6) and protects the plug connector (20) and/or the installation space (10) from environmental influences.

10. The fiber to the home connection assembly (1) according to claim9, **wherein** the base element (6) is ring shaped and the tubular outer housing (8) is attached to a first end (17) of the base element (6) and the cone-shaped protection cap (16) is attached to a second end (18) of the base element (6).

11. The fiber to the home connection assembly (1) according to claim 10, **wherein** the distal end (9) of the tubular outer housing (8) is connected to the base element (6) by a thread (14) and is sealed by a sealing ring (15) and wherein the base element (6) is preferably embedded in the tubular outer housing (8) in axial direction (x) and the cone-shaped protection cap (16) is connected to the tubular outer housing (8).

12. The fiber to the home connection assembly (1) according to one of the preceding claims, **wherein** the ground torpedo (2) has an essentially uniform outer diameter without components protruding away from an outer surface in the circumferential direction.

13. The fiber to the home connection assembly (1) according to one of the preceding claims, **wherein** a fiber tray (21) with a fiber management area (22) is arranged in the installation space (10), which the fiber tray (21) is preferably connected to the base element (6) and/or the tubular outer housing (8), and/or the fiber tray (21) is preferably releasably connected to the base element (6) by latching elements (23).

14. The fiber to the home connection assembly (1) according to one of the preceding claims, **wherein** the ground torpedo (2) comprises an identification element (25) for localizing the fiber to the home connection assembly (1) in the ground.

15. A ground torpedo (2) according to at least one of the preceding claims.
